# EUROPÄISCHE PATENTANMELDUNG

(11) **EP 1 491 094 A2**
(43) Veröffentlichungstag der Anmeldung: **29.12.2004**
(21) Anmeldenummer: 04014275.4
(22) Anmeldetag: 18.06.2004
(51) Int. Cl.: A21B 1/46

(54) **Backofen**

(30) Priorität: 26.06.2003 DE 10328631
(71) Anmelder: Werner & Pfleiderer Lebensmitteltechnik GmbH, 91550 Dinkelsbühl (DE)
(72) Erfinder: Blümel, Frank, 91614 Mönchsroth (DE); Dannenhauer, Bernd, 91550 Dinkelsbühl (DE); Knost, Dieter, 91550 Dinkelsbühl (DE); Fiedler, Rudolf, 91731 Langfurth (DE); Schmidt, Thomas, 97340 Martinsheim (DE)
(74) Vertreter: Hofmann, Matthias, Dr.

(57) **Zusammenfassung**

Ein Backofen (1) weist einen Zugabeabschnitt mit einer Zugabeöffnung (10) zur Zugabe von Backgut (7), einen Backraum (16) und einen Ausgabeabschnitt mit einer Ausgabeöffnung (35) zur Ausgabe von Backgut (7) auf. Zudem ist eine Umluft-Einrichtung mit einer einen Umluftstrom erzeugenden Umluftquelle (40), einer Umluft-Heizeinrichtung (41) und einem Umluft-Führungskanal (58) vorgesehen, welcher abschnittsweise durch den Backraum (16) gebildet ist. Eine Mehrzahl von Aufnahmeabschnitten (21) für Backgut (7) sind um eine horizontale Dreh- bzw. Schwenkachse (25) frei dreh- bzw. schwenkbar im Backraum (16) gelagert. Die Dreh- bzw. Schwenkachsen (25) der Aufnahmeabschnitte (21) liegen auch dann oberhalb des Schwerpunktes der Aufnahmeabschnitte (21), wenn die Aufnahmeabschnitte (21) mit Backgut (7) gefüllt sind. Es resultiert ein Backofen (1), bei dem Backgut (7) während des Backens bewegt und möglichst gleichmäßig verteilt werden kann.

## Beschreibung

Die Erfindung betrifft einen Backofen mit den Merkmalen gemäß dem Oberbegriff des Anspruchs 1.

Ein derartiger Backofen ist durch offenkundige Vorbenutzung bekannt. Derartige Backöfen haben hinsichtlich der Backdauer des Backguts sowie hinsichtlich ihrer Handhabbarkeit noch Verbesserungspotential.

Es ist daher die Aufgabe der vorliegenden Erfindung, einen Backofen der eingangs genannten Art derart weiterzubilden, dass mit diesem eine kürzere Backzeit bei gleichzeitig möglichst verbesserter Handhabbarkeit des Backofens realisiert werden kann.

Diese Aufgabe ist erfindungsgemäß gelöst durch einen Backofen mit den Merkmalen des Kennzeichnungsteils des Anspruchs 1.

Erfindungsgemäß wurde erkannt, dass sich ein effizienteres Backen des Backguts dann ergibt, wenn dieses einerseits im Umluftstrom bewegt ist und andererseits im Backraum möglichst gleichmäßig verteilt ist. Die Schwerpunktslage der Aufnahmeabschnitte ermöglicht es, diese frei dreh- bzw. schwenkbar aufzuhängen.

Eine Antriebseinrichtung gemäß Anspruch 2 ermöglicht eine automatische Bewegung des Backguts im Umluftstrom. Durch eine entsprechende Ansteuerung der Antriebseinrichtung lässt sich die Bewegungsgeschwindigkeit einstellen.

Aufnahmeabschnitte gemäß Anspruch 3 führen zu einer zwingenden Positionierung jedes einzelnen Stückes Backgut, sodass eine vorgegebene Verteilung des Backguts im Backraum optimal erreicht werden kann. Die insbesondere hierbei einsetzbaren Aufnahmekörbe können, wenn sie z. B. aus einem entsprechenden Geflecht gefertigt sind, einen guten Luftdurchsatz gewährleisten. Alternativ können zur entsprechenden Beeinflussung des Backergebnisses auch Aufnahmekörbe ohne Durchbrechungen zum Umluftdurchtritt eingesetzt werden.

Die Unterteilung der Aufnahmeabschnitte in Gruppen gemäß Anspruch 4 führt zu einer konstruktiv relativ einfachen Realisierung der Vereinzelung der Stücke Backgut in den Aufnahmeabschnitten. Ein bevorzugt einsetzbarer Tragrahmen vereinfacht die Ausgestaltung der Gruppen nochmals. Aluminium als Rahmenmaterial, welches vorzugsweise einsetzbar ist, führt zu leichten Aufnahmeabschnitten.

Aufnahmeabschnitte nach Anspruch 5 sind konstruktiv einfach ausführbar.

Eine Ausführungsform des Backofens nach Anspruch 6 mit einer Vakuumpumpe erleichtert zu Beginn eines Backvorgangs das Aufheizen des Backraums. Alternativ oder zusätzlich kann eine Beschwadungseinrichtung vorgesehen sein, welche zu einer kontrollierten Befeuchtung des Backguts eingesetzt wird, was zu einer Verbesserung des Backergebnisses führt. In Verbindung mit der Vakuumpumpe lässt sich mit der Beschwadungseinrichtung ein gleichmäßigeres Befeuchten des Backguts realisieren, was das Backergebnis nochmals verbessert.

Eine Rotation der Aufnahmeabschnitte gemäß Anspruch 7 ist konstruktiv mit geringem Aufwand realisierbar.

Umluft-Durchtrittsöffnungen nach Anspruch 8 verbessern die Umströmung des Backguts.

Eine Backgut-Durchtrittsöffnung nach Anspruch 9 vereinfacht die Konstruktion der äußeren Begrenzungswand, da in dieser nur eine Durchtrittsöffnung vorgesehen zu sein braucht, die sowohl für die Zugabe als auch für die Ausgabe von Backgut genutzt werden kann.

Verlagerbare Türen nach Anspruch 10 erleichtern die Handhabung des Backofens. Eine Backofen-Zugabetür oberhalb des Backraums sowie eine Backofen-Ausgabetür unterhalb des Backraums ermöglichen einen Transport des Backguts unter Schwerkrafteinfluss.

Eine gesteuerte Verlagerung nach Anspruch 11, welche mittels einer zentralen Steuerung des Backofens vorgegeben werden kann, führt zur Möglichkeit eines mittels des Backofens durchführbaren vollautomatischen Backvorgangs.

Eine Ausführung eines Backofens nach Anspruch 12 lässt sich insbesondere auch optisch ansprechend gestalten, was dann von Vorteil ist, wenn der Backofen in einem Ladengeschäft betrieben wird. Zudem lässt sich eine derart ausgestaltete Antriebsanordnung robust und betriebssicher ausführen.

Ein Antriebsstrang nach Anspruch 13 ist konstruktiv einfach.

Eine Ausgestaltung der Antriebsanordnung nach Anspruch 14 kann auch bei relativ langen Aufnahmeabschnitten eingesetzt werden.

Eine Führungseinrichtung nach Anspruch 15 gewährleistet eine sichere Führung der Aufnahmeabschnitte.

Eine Mitnehmereinrichtung nach Anspruch 16 ist konstruktiv wenig aufwendig und ermöglicht ein sicheres gesteuertes Entleeren der Aufnahmeabschnitte.

Ausführungsbeispiele der Erfindung werden nachfolgend anhand der Zeichnung näher erläutert. In dieser zeigen:
- Fig. 1: eine perspektivische Ansicht eines Backofens;
- Fig. 2: eine Seitenansicht des Backofen von Fig. 1;
- Fig. 3: einen Schnitt gemäß Linie III-III in Fig. 2;
- Fig. 4: eine Aufsicht auf eine Gruppe von Aufnahmeabschnitten für Backgut, wobei fünf von sechs Aufnahmekörben weggelassen sind;
- Fig. 5: einen Schnitt gemäß Linie V-V in Fig. 2;
- Fig. 6: eine perspektivische Ansicht einer weiteren Ausführungsform eines Backofens;
- Fig. 7: einen zu Fig. 5 ähnlichen Schnitt durch die Ausführungsform des Backofens nach Fig. 6 mit abgenommenem Außengehäuse;
- Fig. 8: einen Schnitt gemäß Linie VIII-VIII in Fig. 7;
- Fig. 9: eine perspektivische Ansicht eines Aufnahmeabschnitts des Backofens nach den Fig. 6 bis 8; und
- Fig. 10 und 11: Momentaufnahmen bei der Entleerung des Aufnahmeabschnitts nach Fig. 9.

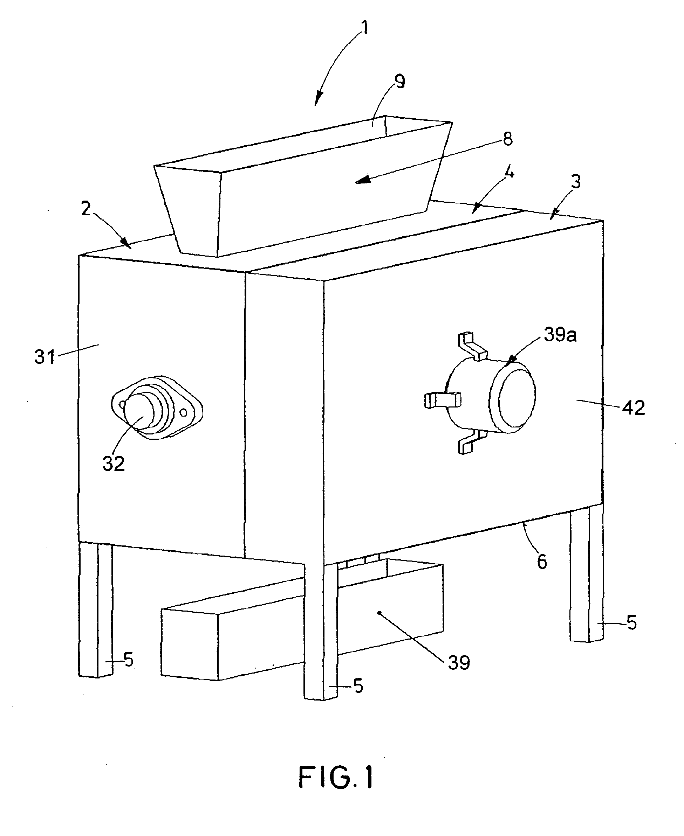

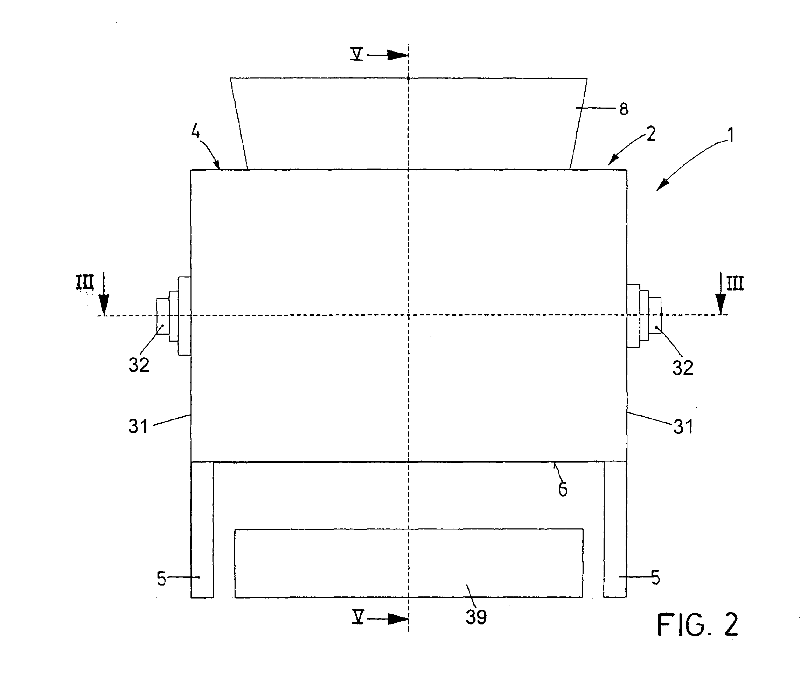

In den Figuren 1 bis 5 ist eine erste Ausführungsform eines Backofens 1 dargestellt. Dieser weist ein quaderförmiges Außengehäuse 2 auf, welches in ein Umluftquellengehäuse 3 und ein Backraumgehäuse 4 unterteilt ist. Das Außengehäuse 2 wird von vier Stützfüßen 5 derart getragen, dass eine Bodenwand 6 des Außengehäuses 2 von der Aufstandsfläche der Stützfüße 5 beabstandet ist.

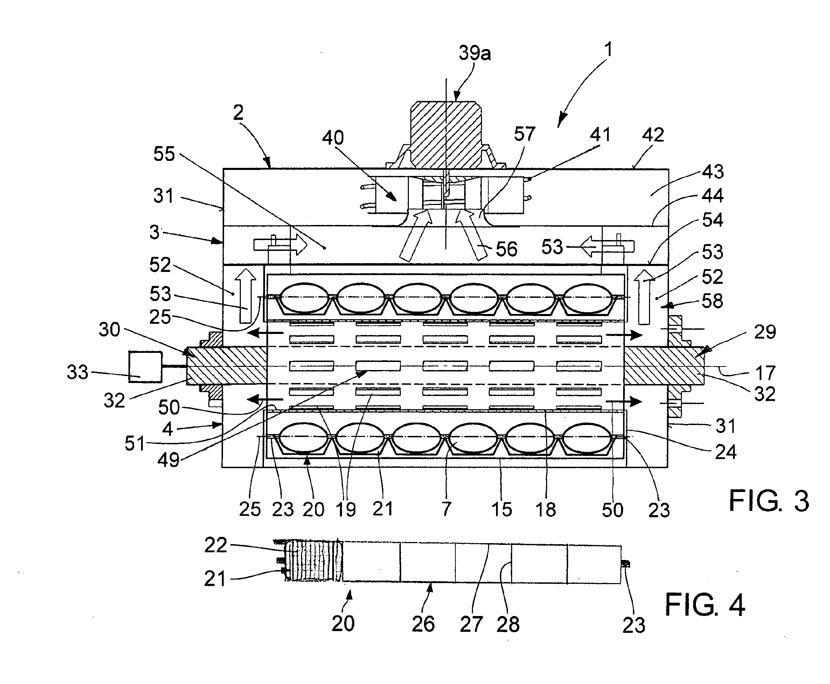

Backgut 7, welches z. B. in Figur 3 dargestellt ist, z. B. gefrorene, teilgebackene Brötchen, gelangt über einen Zuggabetrichter 8 mit rechteckiger Beschickungsöffnung 9 über eine ebenfalls rechteckige Zugabeöffnung 10 ins Innere des Backofens 1. Der Zugabetrichter 8 ist auf die Oberseite des Backraumgehäuses 4 aufgesetzt.

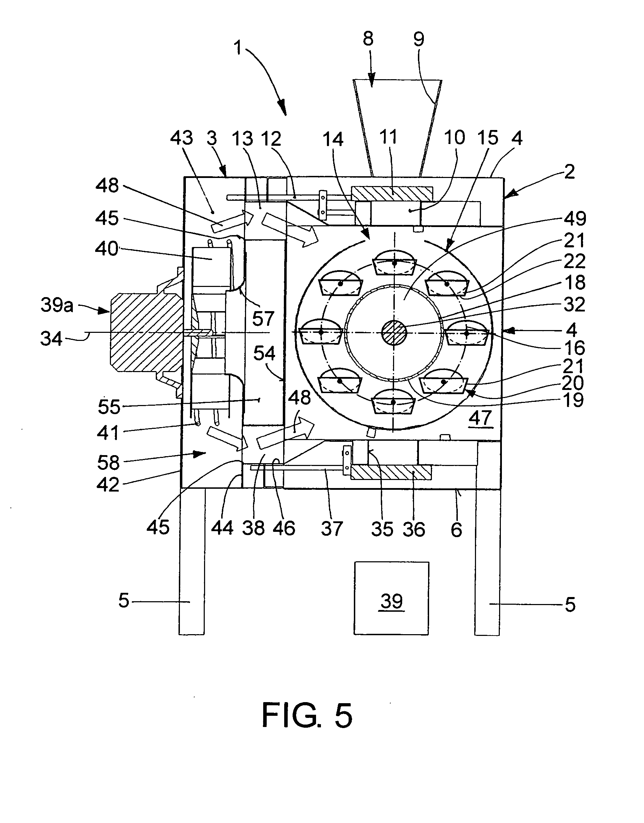

Innere Details des Backofens 1 sind in den Figuren 3 bis 5 dargestellt. Die Zugabeöffnung 10 kann mittels eines aufliegenden Zugabeschiebers 11, der die Funktion einer Backofen-Zugabetür hat, verschlossen werden. Hierzu wird eine mit dem Zugabeschieber 11 verbundene und horizontal von diesem abstehende erste Betätigungsstange 12 von einem z. B. in Figur 5 schematisch angedeuteten Aktuator 13 axial verlagert.

In Figur 5 ist der Zugabeschieber 11 in einer Backposition dargestellt, in der die Zugabeöffnung 10 vom Zugabeschieber 11 verschlossen ist. In einer nicht dargestellten Zugabeposition ist der Zugabeschieber 11 gegenüber der Backposition horizontal verlagert, sodass eine Zugabe von Backgut 7 durch die Zugabeöffnung 10 möglich ist.

In der Zugabeposition des Backofens 1 fluchtet mit der Zugabeöffnung 10 eine als Schlitz ausgeführte Durchtrittsöffnung 14 in einer trommelförmigen äußeren Begrenzungswand 15 für einen Backraum 16 des Backofens 1. Die äußere Begrenzungswand 15 ist rotationssymmetrisch zu einer Rotationsachse 17. Nach innen hin ist der Backraum 16 begrenzt durch eine ebenfalls trommelförmige, koaxial zur äußeren Begrenzungswand 15 angeordnete innere Begrenzungswand 18. Sowohl die äußere Begrenzungswand 15 als auch die innere Begrenzungswand 18 weisen rechteckige Durchtrittsöffnungen 19 für Umluft auf, welche dem Backraum 16 zugeführt wird. Alternativ können die Begrenzungswände 15, 18 auch aus Drahtgeflecht gefertigt sein. Bei einer Variante des Backofens 1 können die Begrenzungswände 15, 18 auch entfallen, sodass sich die nachfolgend beschriebenen Backgut-Aufnahmen frei im Backraumgehäuse 4 bewegen.

In dem hohlzylindrischen Raum innerhalb des Backraums 16, der begrenzt ist durch die äußere Begrenzungswand 15 und die innere Begrenzungswand 18 weist der Backofen 1 insgesamt acht Gruppen 20 von Aufnahmeabschnitten 21 mit jeweils sechs Aufnahmekörben 22 für jeweils ein Stück Backgut 7 auf. Auch andere Anzahlen von Gruppen 20, z. B. zehn Gruppen 20, und von Aufnahmekörben 22 pro Gruppe 20, z. B. fünf Aufnahmekörbe 22, sind möglich. Jede Gruppe 20 kann eine Reihe von insgesamt sechs längs der Rotationsachse 17 der Begrenzungswände 15, 18 aufgereihte Stücke Backgut 7 aufnehmen. Insgesamt liegen beim Backofen 1 48 Aufnahmeabschnitte 21 vor.

Jede Gruppe 20 von Aufnahmeabschnitten 21 ist über Axial-Radiallager 23 an Stirnwänden 24, welche über die Stirnwand der inneren Begrenzungswand 18 überstehen und diese bis zur äußeren Begrenzungswand 15 hin fortsetzen, gelagert, sodass jede Gruppe 20 um eine individuelle horizontale Rotationsachse 25 längs der Reihung der Aufnahmeabschnitte 21 drehbar ist. Die einzelnen Aufnahmeabschnitte 21 sind einseitig offen. Die Größe der Aufnahmekörbe 22, insbesondere deren Tiefe, ist auf die Form und Größe der einzelnen Stücke Backgut 7 derart abgestimmt, dass die Rotationsachse 25 der Aufnahmeabschnitte 21 oberhalb des Schwerpunktes der Aufnahmeabschnitte 21 auch dann liegt, wenn letztere mit Backgut 7 gefüllt sind. Der Gesamtschwerpunkt eines ein Stück Backgut 7 enthaltenden Aufnahmeabschnitts 21 liegt daher zwischen dem Boden des Aufnahmekorbes 22 und der Rotationsachse 25 einer Gruppe 20. Die Gruppe 20 stellt damit ein Gehänge für Backgut 7 dar.

In Figur 4 ist eine einzelne Gruppe 20 von Aufnahmeabschnitten 21 dargestellt, wobei zur Veranschaulichung fünf der insgesamt sechs Aufnahmekörbe 22 weggelassen sind. Dargestellt ist nur der äußerste linke Aufnahmekorb 22. Dieser ist aus Drahtgeflecht gefertigt. Das Backgut 7 kann daher auch von der Auflageseite, mit der es am Aufnahmekorb 22 anliegt, mit Umluft umströmt werden. Die Aufnahmekörbe 22 einer Gruppe 20 werden von einem gemeinsamen Tragrahmen 26 aus Aluminium getragen. Auch andere Materialien für den Tragrahmen 26 sind möglich. Jeder Aufnahmekorb 22 ist dabei in einen rechteckigen Rahmenabschnitt 27 des Tragrahmens 26 eingehängt. Die einzelnen Rahmenabschnitte 27 schließen direkt aneinander an, sodass eine Querstrebe 28 zwischen zwei Rahmenabschnitten 27 diese beiden Rahmenabschnitte 27 gleichzeitig begrenzt.

In Figur 5 ist gezeigt, wie bedingt durch die oben erläuterte Schwerpunktslage der das Backgut 7 enthaltenden Aufnahmeabschnitte 21 und bedingt durch die Lagerung der Gruppen 20 diese bei einem Umlauf um die zentrale Rotationsachse 17 immer eine Orientierung derart beibehalten, dass der Aufnahmekorb 22 unterhalb des Stücks Backgut 7 zuliegen kommt und diese somit trägt.

Die innere Begrenzungswand 18 und die äußere Begrenzungswand 15 sind unabhängig voneinander angetrieben um die zentrale Rotationsachse 17 drehbar. Dargestellt ist der Antrieb für die innere Begrenzungswand 18. Die innere Begrenzungswand 18 ist mittels zweier angeflanschter Axial-Radiallager 29, 30 in stirnseitig einander gegenüberliegenden Seitenwänden 31 des Backraumgehäuses 4 drehbar gelagert. Eine Antriebswelle 32, welche drehfest mit der inneren Begrenzungswand 18 verbunden ist, wird hierbei von einem Antriebsmotor 33 angetrieben.

Unterhalb des Backraums 16 weist der Backofen 1 eine bezüglich einer horizontale Mittelebene 34 symmetrisch zur Zugabeöffnung 10 angeordnete Ausgabeöffnung 35 sowie einen diese verschließenden Ausgabeschieber 36 auf. Letzterer ist über eine Betätigungsstange 37 mittels eines Akuators 38 zwischen einer in Figur 5 dargestellten Schließstellung und einer Ausgabestellung, in der der Ausgabeschieber 36 die Ausgabeöffnung 35 freigibt, verlagerbar. Der Ausgabeschieber 36, die Betätigungsstange 37 sowie der Aktuator 38 sind ebenfalls symmetrisch zur Mittelebene 34 zu den entsprechenden, der Zugabeöffnung 10 zugeordneten Komponenten angeordnet. Mit der Ausgabeöffnung 35 fluchtend ist unterhalb des Außengehäuses 2 ein Ausgabebehälter 39 angeordnet.

Als Umluftquelle des Backofens 1 dient eine seitlich des Backraums 16 angeordnete Heizeinrichtung 39a mit einem angetriebenen Gebläserotor 40, welchen eine Heizspirale 41 umgibt. Der Gebläserotor 40 und die Heizspirale 41 sind von einer Seitenwand 42 des Umluftquellengehäuses 3 getragen. Vom Gebläserotor 40 gelangt die erzeugte Umluft zunächst in eine erste Umluftkammer 43, die seitlich begrenzt ist von der Seitenwand 42 sowie von einer ersten Zwischenwand 44. Benachbart zur Oberseite des Außengehäuses 2 einerseits und zur Bodenwand 6 andererseits sind in der ersten Zwischenwand 44 Wandöffnungen 45 vorgesehen, über die die erste Umluftkammer 43 durch Umluftkanäle 46 mit einem den Backraum 16 enthaltenden wärmeisolierten Innenraum 47 des Backraumgehäuses 4 in Verbindung steht. Der Innenraum 47 stellt eine zweite Umluftkammer dar, in welche die Umluft ausgehend von der ersten Umluftkammer 43 strömt, wie in Figur 5 durch Strömungsrichtungspfeile 48 angedeutet. Durch die Umluft-Durchtrittsöffnungen 19 in der äußeren Begrenzungswand 15 gelangt die Umluft anschließend in den Backraum 16 und von dort durch die Umluft-Durchtrittsöffnungen 19 in der inneren Begrenzungswand 18 und ggf. durch die Durchtrittsöffnungen in den Aufnahmekörben 22 in eine innere dritte Umluftkammer 49, welche von der inneren Begrenzungswand 18 begrenzt ist. Hier teilt sich die Umluft und strömt, wie in Figur 3 durch Strömungsrichtungspfeile 50 angedeutet, zunächst parallel zur Rotationsachse 17.

Über Durchtrittskanäle 51 zwischen der inneren Begrenzungswand 18 und der Antriebswelle 32 gelangt die Umluft von der dritten Umluftkammer 49 in vierte Umluftkammern 52. Diese sind seitlich begrenzt von den Seitenwänden 31 sowie den Stirnwänden 24.

Wie durch Strömungsrichtungspfeile 53 angedeutet, strömt die Umluft anschließend durch Durchtrittskanäle in einer benachbart zur äußeren Begrenzungswand 15 angeordneten zweiten Zwischenwand 54 in eine fünfte Umluftkammer 55. Von dieser aus strömt die Umluft, wie durch Strömungsrichtungspfeile 56 angedeutet, durch einen zentral in der ersten Zwischenwand 44 angeordneten Umluftkanal 57 zurück zum Gebläserotor 40.

Die erste Umluftkammer 43, der Umluftkanal 46, der Innenraum 47, die Umluft-Durchtrittsöffnungen 19, der Backraum 16, die dritte Umluftkammer 49, die Durchtrittskanäle 51, die vierte Umluftkammer 52, die fünfte Umluftkammer 55 sowie der Umluftkanal 57 bilden einen geschlossenen Umluft-Führungskanal 58.

Der Backofen 1 wird folgendermaßen betrieben: Zum kontinuierlichen Betrieb des Backofens 1 wird im Zugabetrichter 8 ständig eine ausreichende Menge von Backgut 7 vorgehalten. Die äußere Begrenzungswand 15 wird dann solange um die zentrale Rotationsachse 17 gedreht, bis die Durchtrittsöffnung 14 in die in Figur 5 dargestellte höchstgelegene Position kommt, in der sie genau unterhalb der Zugabeöffnung 10 liegt. Die innere Begrenzungswand 18 mit der Stirnwand 24 und den Gruppen 20 wird dabei so mitgedreht, dass in dieser Position der Durchtrittsöffnung 14 eine Gruppe 20 genau unterhalb der Durchtrittsöffnung 14 zuliegen kommt. Anschließend wird der Zugabeschieber 11 zum Befüllen dieser ersten der Durchtrittsöffnung 14 zugeordneten Gruppe 20 solange geöffnet, bis die Aufnahmeabschnitte 21 dieser Gruppe 20 jeweils mit einem Stück Backgut 7 befüllt sind. Diese Gruppe 20 wird auf diese Weise mit einer längs der zentralen Rotationsachse 17 angeordneten Reihe von Stücken Backgut 7 gefüllt.

Anschließend wird die innere Begrenzungswand 18 z. B. in Figur 5 im Uhrzeigersinn soweit gedreht, bis die nächste Gruppe 20 von Aufnahmeabschnitten 21 die Position der gerade befüllten Gruppe 20 eingenommen hat. Dann wird diese nächste in Befüllposition gedrehte Gruppe 20 befüllt. Dieser Vorgang wiederholt sich taktweise, bis alle acht Gruppen 20 befüllt sind.

Die beiden Begrenzungswände 15, 18 werden dann mit gleicher Winkelgeschwindigkeit während des Backens synchron angetrieben. Mittels des Gebläserotors 40 und der Heizspirale 41 wird während dem Backen Umluft erzeugt, welche den Backraum 16 auf dem beschriebenen Strömungsweg durch den Umluft-Führungskanal 58 durchströmt, sodass das Backgut 7 unter der Wirkung der Umluft während der Rotation der Gruppen 20 gebacken wird.

Nach Abschluss des Backvorgangs, der z. B. 12 bis 15 Minuten dauern kann, werden die Begrenzungswände 15, 18 zunächst in eine Position gebracht, bei der die Durchtrittsöffnung 14 in einer der Position in Figur 5 genau gegenüberliegenden tiefgelegenen Position ist. Die Zuordnung der Durchtrittsöffnung 14 zur leeren Gruppe 20 bleibt hierbei zunächst erhalten. Anschließend wird nur die innere Begrenzungswand 18 taktweise derart gedreht, dass immer eine befüllte Gruppe 20 der Durchtrittsöffnung 14 zugeordnet wird. Zur Entleerung der Aufnahmeabschnitte 21 in dem Ausgabeschieber 36 benachbarten Bereich wird mit Hilfe eines in den Backraum 16 eingeführten und in den Figuren 3 bis 5 nicht dargestellten Mitnehmers eine Zwangskippung dieser Gruppe 20 um ihre individuelle Rotationsachse 25 herbeigeführt, wodurch das Backgut 7 aus den Aufnahmekörben 22 dieser Gruppe 20 durch die Durchtrittsöffnung 14 und den geöffneten Ausgabeschieber 36 in den Ausgabebehälter 39 fällt.

Der Backvorgang, insbesondere die Ansteuerung des Gebläserotors 40, des Antriebsmotors 33, der Aktuatoren 13, 38 sowie des nicht dargestellten Antriebs für die äußere Begrenzungswand 15 erfolgt über ein Backprogramm gesteuert durch eine nicht dargestellte zentrale Steuereinrichtung des Backofens 1.

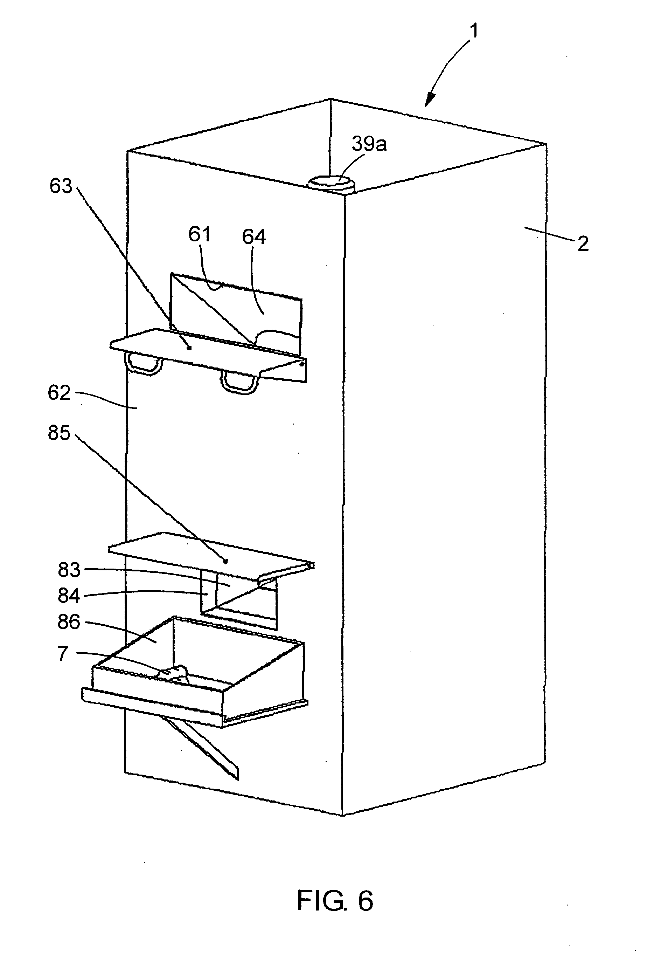

Eine weitere Ausführungsform eines Backofens wird nachfolgend anhand der Figuren 6 bis 8 beschrieben. Komponenten, die denjenigen entsprechen, die vorstehend unter Bezugnahme auf die Figuren 1 bis 5 schon diskutiert wurden, tragen die gleichen Bezugszeichen und werden nicht nochmals im Einzelnen erläutert.

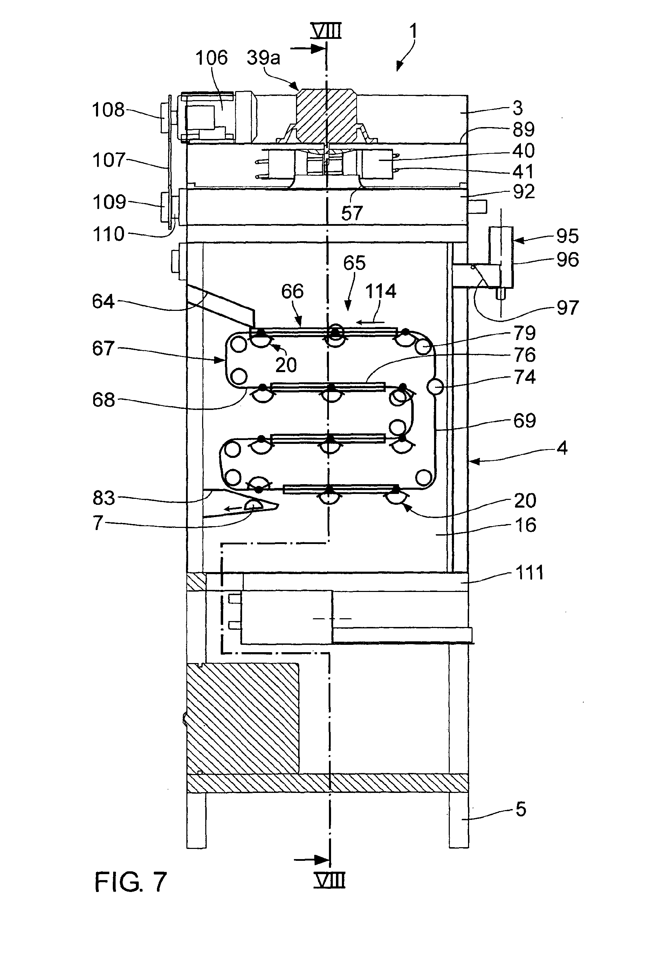

Anstelle eines Zugabetrichters weist der Backofen 1 nach den Figuren 6 bis 8 eine rechteckige Zugabeöffnung 61 für Backgut 7 auf. Die Zugabeöffnung 61 ist im oberen Abschnitt einer Seitenwand 62 des Außengehäuses 2 des Backofens 1 angeordnet und mittels einer unterhalb der Zugabeöffnung 61 an der Seitenwand 62 angelenkten Zugabetür 63 verschließbar. Der Zugabeöffnung 61 innerhalb des Außengehäuses 2 nachgeordnet ist ein abwärtsführender Zugabeschacht 64. Der Zugabeschacht 64 mündet im Backraum 16 oberhalb einer Aufnahme/Führungsanordnung 65 aus, die innerhalb des Backraums 16 angeordnet ist. Die Aufnahme/Führungsanordnung 65 weist eine Mehrzahl von Gruppen 20 von Aufnahmeabschnitten 21 für Backgut 7 auf, welche wie diejenigen gestaltet sind, die im Zusammenhang mit der Ausführungsform nach den Figuren 1 bis 5 beschrieben wurden. Die Gruppen 20 werden von einer Führungseinrichtung 66 längs einer geschlossenen Verlagerungsbahn 67 verlagert, die einen im Querschnitt der Figur 7 im Wesentlichen zickzackförmigen Bahnabschnitt 68 und einen vertikal verlaufenden Bahnabschnitt 69 aufweist. Die Verlagerungsbewegung der Gruppen 20 erfolgt angetrieben durch einen Antriebsmotor 70. Zur Kraftübertragung der Verlagerungsbewegung der Gruppen 20 längs der Verlagerungsbahn 67 dienen als Antriebsstränge zwei Endlos-Antriebsketten 71, 72, die parallel zueinander benachbart zu zwei gegenüberliegenden Seitenwänden 73, 73a des Backraumgehäuses 4 laufen. Die Lagerstifte der Axial-Radiallager 23 der Gruppen 20 sind in gegenüberliegenden Kettengliedern der Antriebsketten 71, 72 drehbar gelagert. In die Antriebskette 71 greift ein Antriebsritzel 74 ein, welches über eine Antriebswelle 75 mit dem Antriebsmotor 70 verbunden ist.

Zur Führung der umlaufenden Bewegung der Antriebsketten 71, 72 bei der Verlagerung der Gruppen 20 längs der Verlagerungsbahn 67 dient eine Mehrzahl von Führungsschienen 76 der Führungseinrichtung 66. Jeweils vier übereinanderangeordnete und sich horizontal erstreckende Führungsschienen 76 sind dabei symmetrisch zueinander an den Innenseiten der Seitenwände 73, 73a festgelegt. Freie Kantenbereiche 77 der Führungsschienen 76 sind um 90° nach oben umgebogen, sodass die Führungsschienen 76 mitsamt den ihnen zugeordneten Seitenwänden 73, 73a Führungsnuten 78 für die Antriebsketten 71, 72 vorgeben. Längs der Verlagerungsbahn 67 wird jede Antriebskette 71, 72 über jeweils acht Umlenkrollen 79 umgelenkt, welche ebenfalls Bestandteil der Führungseinrichtung 66 sind.

Dem untersten Bahnteil der Verlagerungsbahn 67 ist eine Mitnehmereinrichtung 80 zugeordnet. Diese weist einen magnetisch betätigbaren Aktuator 81 auf, der an der Seitenwand 73a des Backraumgehäuses 4 außen angeflanscht ist. Mit dem Aktuator 81 verbunden ist ein Mitnehmerbolzen 82, der sich horizontal erstreckt und durch die Seitenwand 73a mittels des Aktuators 81 in den Backraum 16 eingefahren werden kann.

Dem untersten Bahnteil der Verlagerungsbahn 67 ebenfalls zugeordnet ist ein schräg nach außen abfallender Ausgabeschacht 83, der mit einer Ausgabeöffnung 84 in der Seitenwand 62 fluchtet. Die Ausgabeöffnung 84 kann mit einer oberhalb von dieser an der Seitenwand 62 angelenkten Ausgabetür 85 verschlossen werden. Unterhalb der Ausgabeöffnung 84 ist an der Seitenwand 62 ein Ausgabebehälter 86 für das Backgut 7 montiert.

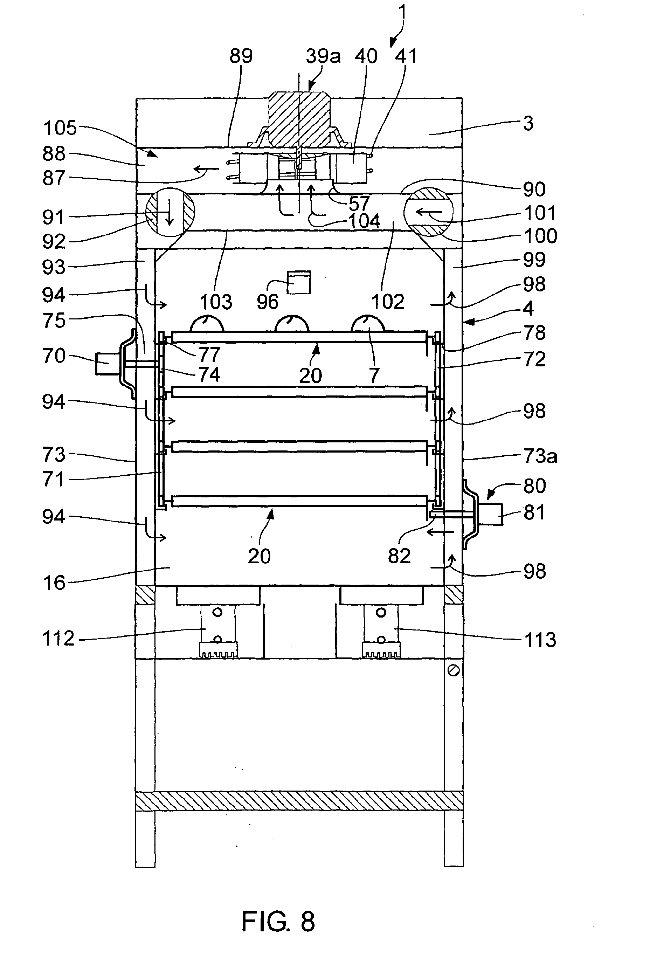

Während der Verlagerung innerhalb des Backraums 16 wird das Backgut 7 über den Gebläserotor 40, der bei der Ausführungsform nach den Figuren 6 bis 8 oberhalb des Backraums 16 angeordnet ist, von Umluft umströmt. Figur 8 zeigt einen ersten Strömungsweg für die erzeugte Umluft durch den Backraum 16 im Backraumgehäuse 4.

Die erzeugte Umluft strömt zunächst, wie durch einen Strömungsrichtungspfeil 87 angedeutet, durch eine erste Umluftkammer 88, die zwischen einem ersten Zwischenboden 89 und einem parallel hierzu darunter angeordneten zweiten Zwischenboden 90 ausgebildet ist.

Anschließend strömt die Umluft, wie durch einen Strömungsrichtungspfeil 91 angedeutet, nach unten durch ein erstes Ventilelement 92 mit zylindrischen Zweiwege-Ventilkörper. Letzteres ist um eine horizontale Achse, die mit der Längsachse des zylindrischen Ventilkörpers zusammenfällt, drehbar und ist so drehpositioniert, dass es eine vertikal Strömungsverbindung zwischen der ersten Umluftkammer 88 und einer zweiten Umluftkammer 93 freigibt. Letztere ist begrenzt durch zwei parallele vertikale Zwischenböden der Seitenwand 73. Wie durch Strömungsrichtungspfeile 94 angedeutet, strömt die Umluft von der zweiten Umluftkammer 93 durch eine Mehrzahl von benachbart zu den Führungsschienen 76 angebrachten Verbindungskanälen in den Backraum 16 und umströmt insbesondere die Gruppen 20 der Aufnahmeabschnitte 21. Der Druck im Backraum 16 wird begrenzt durch eine Dampfentlastungseinrichtung 95, die einen aus den Backraum herausführenden und um 90° nach oben abknickenden Dampfentlastungskanal 96 aufweist, der, solange kein Überdruck im Backraum 16 vorliegt, von einer Dampfentlastungsklappe 97 verschlossen ist.

Nach Umströmen des Backguts 7 in den Aufnahmeschnitten 21 durchtritt die Umluft Verbindungskanäle, welche spiegelbildlich zu denjenigen in der Seitenwand 73 in der gegenüberliegenden Seitenwand 73a vorliegen, wie durch Strömungsrichtungspfeile 98 angedeutet. Die Umluft durchtritt anschließend durch eine spiegelbildlich zur zweiten Umluftkammer 93 ausgebildete dritte Umluftkammer 99 in der Seitenwand 73a nach oben in Richtung auf ein zweites Ventilelement 100 zu. Letzteres ist in gleicher Weise wie das erste Ventilelement 92 ausgebildet, diesem jedoch gegenüber um 90° verdreht drehpositioniert, sodass es eine horizontale Strömungsverbindung für die Umluft vorgibt. Die Umluft strömt daher, wie durch einen Strömungsrichtungspfeil 101 angedeutet, von der dritten Umluftkammer 99 in eine vierte Umluftkammer 102. Diese ist seitlich begrenzt durch die beiden Ventilelemente 92, 100, nach oben begrenzt durch den zweiten Zwischenboden 90 und nach unten begrenzt durch einen dritten Zwischenboden 103. Anschließend strömt die Umluft, wie durch Strömungsrichtungspfeile 104 angedeutet, durch den Umluftkanal 57 zurück zum Gebläserotor 40. Die Umluftkammern 88, 93, 99, 102 bilden gemeinsam mit dem Backraum 16 einen geschlossenen Umluft-Führungskanal 105.

In der genannten Drehposition des ersten Ventilelements 92 dichtet dieses zwischen dem zweiten Zwischenboden 90 und dem dritten Zwischenboden 103 die vierte Umluftkammer 102 ab, sodass die Umluft, wie durch den Strömungsrichtungspfeil 104 angedeutet, wieder in die erste Umluftkammer 88 einströmt.

Die Ventilelemente 92 und 100 werden getaktet zwischen den vorstehend beschriebenen ersten Drehpositionen, in denen sie den ersten Strömungsweg freigeben, und zweiten Drehpositionen, die gegenüber den ersten Drehpositionen jeweils um 90° verdreht sind, in denen sie einen zweiten Strömungsweg freigeben, umgeschaltet. Bei diesem zweiten Strömungsweg gibt das erste Ventilelement 92 einen horizontalen Durchlass frei und das zweite Ventilelement 100 gibt einen vertikalen Durchlass frei, sodass bei dem zweiten Strömungsweg die Umluft von der ersten Umluftkammer 88 zunächst in die dritte Umluftkammer 99, von dort in den Backraum 16, von dort in die zweite Umluftkammer 93, von dort in die vierte Umluftkammer 102 und angesaugt durch den Gebläserotor 40 wieder in die erste Umluftkammer 88 strömt. Backgut 7, welches in Figur 8 bezüglich der vertikalverlaufenden Symmetrieachse zwischen den beiden Antriebsketten 71, 72 außermittig angeordnet ist, wird durch dieses Umschalten der Strömungswege während der halben Beströmungsdauer z. B. von Umluft umströmt, welche einen geringen Weg durch den Backraum 16 zurückgelegt hat, und in der anderen Hälfte der Beströmungsluft von Umluft, welche einen weiteren Weg durch den Backraum 16 zurückgelegt hat. In Kombination mit der Verlagerung der Gruppen 20 der Aufnahmeabschnitte 21 längs des zickzackförmigen Bahnabschnitts 68 ergibt dies unabhängig von der jeweiligen individuellen Position eines einzelnen Stücks Backgut 7 auf den Gruppen 20 integral vergleichbare Backverhältnisse, sodass jede Backgut-Charge auf den Gruppen 20 gleichmäßig durchgebacken wird.

Temperaturgradienten der Umluft längs der beiden Strömungswege werden auf diese Weise ausgeglichen.

Beim Umschalten zwischen den Strömungswegen werden die Ventilelemente 92, 100 mittels eines Ventilelement-Antriebsmotors 106 verdreht. Dieser ist auf dem ersten Zwischenboden 89 des Umluftquellengehäuses 3 montiert und treibt über einen Antriebsriemen 107 Transmissionszahnräder 108, 109 an. Aus Sicht der Figur 7 liegen zwei Transmissionszahnräder 109 hintereinander vor, die jeweils einem der Ventilelemente 92, 100 über Abtriebswellen 110 zugeordnet sind.

Unterhalb eines Backraumbodens 111 sind, getragen vom Backraumgehäuse 4, zwei Beschwadungsmodule 112, 113 angeordnet. Diese dienen der Erzeugung von Wasserdampf-Schwaden, mit denen das Backgut 7 im Backraum 16 gesteuert während des Backvorgangs befeuchtet werden kann.

Der Backofen 1 der Ausführung nach den Figuren 6 bis 8 wird folgendermaßen betrieben: Zunächst wird gesteuert über den Antriebsmotor 70 eine Gruppe 20 in eine Befüllposition unterhalb des Ausgabeendes des Zugabeschachts 64 gebracht. Durch den Zugabeschacht 64 werden dann die Aufnahmeabschnitte 21 dieser Gruppe 20 befüllt. Anschließend werden längs eines Richtungspfeils 114 in Figur 7 die Antriebsketten 71, 72 taktweise angetrieben, bis die nächste Gruppe 20 unterhalb des Endes des Zugabeschachts 64 zuliegen kommt. Nun wird diese Gruppe 20 befüllt. Dieser Vorgang wiederholt sich taktweise, bis alle Gruppen 20 befüllt sind. Anschließend wird das Backgut 7 in den Aufnahmeabschnitten 21 gebacken, während es längs der Verlagerungsbahn 67 gefördert wird. Nach Abschluss des Backvorgangs, der z. B. 12 bis 15 Minuten dauern kann, fährt der Mitnehmerbolzen 82, gesteuert über den Aktuator 81 in den Backraum 16 ein. Den Mitnehmerbolzen 82 passierende Gruppen 20 werden von diesem um ihre jeweilige Rotationsachse 25 geschwenkt, bis das in dieser Gruppe aufgenommene Backgut 7 aus den Aufnahmeabschnitten 21 herausfällt. Das Backgut 7 fällt dann in den Ausgabeschacht 83 und bei geöffneter Ausgabetür 85 in den Ausgabebehälter 86.

Der Backvorgang, insbesondere die Ansteuerung des Gebläserotors 40, des Antriebsmotors 70, der Mitnehmereinrichtung 80, der Ventilelemente 92, 100 sowie der Beschwadungsmodule 112, 113 erfolgt über ein Backprogramm gesteuert durch eine nicht dargestellte zentrale Steuereinrichtung des Backofens 1.

Pro Backschritt können im Backprogramm die Parameter Temperatur, Dampfmenge für die Beschwadung, Backzeit, Drehzahl der Antriebswelle 33 oder 75 während des Backens, Drehzahl des Gebläserotors 40 sowie ggf. Anzahl der Stücke Backgut 7 pro Aufnahmeabschnitt eingestellt werden.

Zusätzlich können die beschriebenen Ausführungsformen eine an den Backraum angeschlossene und gesteuert zuschaltbare Vakuumpumpe aufweisen, mit der im Backraum 16 ein vorgegebener Unterdruck einstellbar ist.

Zu Beginn des Backvorgangs kann die Vakuumpumpe aktiviert werden, sodass ein schnelleres Aufheizen des Backraums 16 ermöglicht ist.

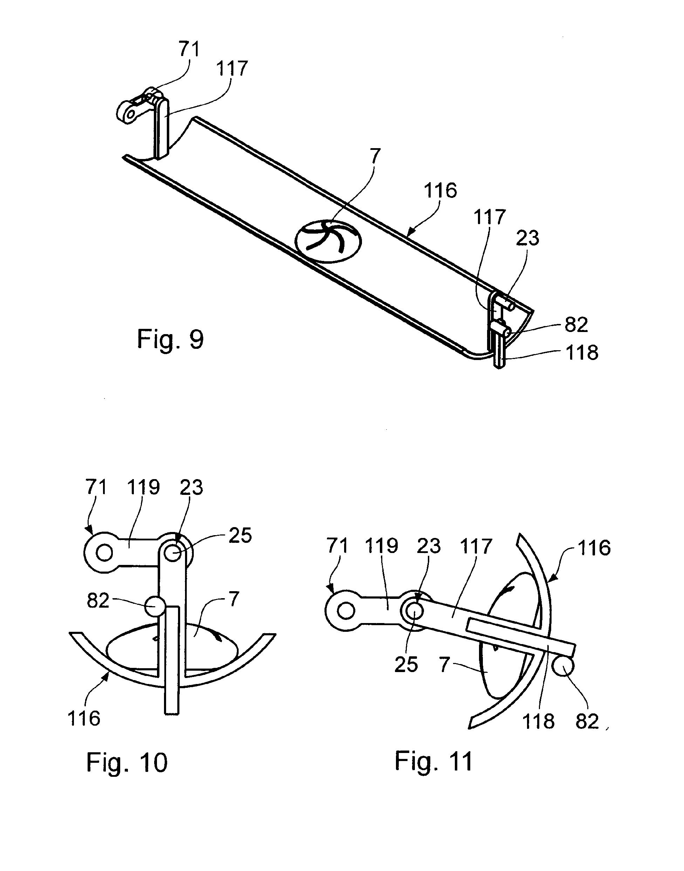

In den Figuren 9 bis 11 ist eine zu den Gruppen 20 der Ausführungen nach den Figuren 1 bis 8 alternative Aufnahme des Backguts 7 in einem Gehänge dargestellt. Komponenten, die denjenigen entsprechen, die schon unter Bezugnahme insbesondere auf Figur 4 beschrieben wurden, tragen die gleichen Bezugszeichen und werden nicht nochmals im Einzelnen erläutert.

Als Aufnahmeabschnitt dient beim Gehänge nach den Figuren 9 bis 11 eine Aufnahmerinne 116, die sich wie die eine der Gruppe 20 entsprechende Längserstreckung hat. Die Aufnahmerinne 116 dient zur Aufnahme von fünf Stücken Backgut 7. An ihren beiden stirnseitigen Enden ist die Aufnahmerinne 116 über aufrechte Verbindungsstangen 117 mit den Lagerstiften der Axial-Radiallager 23 verbunden. Der Lagerstift des Axial-Radiallagers 23 greift in eine Lageraufnahme eines Kettenglieds 119 der Antriebskette 71 bzw. 72 ein. Die Länge der Verbindungsstangen 117 ist derart, dass die Rotationsachse 25 der Aufnahmerinne 116 oberhalb des Schwerpunktes der Aufnahmerinne 116 auch dann liegt, wenn diese mit Backgut 7 gefüllt ist. An der der Aufnahmerinne 116 gegenüberliegenden Seite einer der Verbindungsstangen 117 ist fest mit der Aufnahmerinne 116 eine Mitnehmerstange 118 angebracht, welche sich parallel zur Verbindungsstange 117 erstreckt und nach unten über den Boden der Aufnahmerinne 116 hinaus übersteht.

Die Mitnehmerstange 118 wirkt mit dem Mitnehmerbolzen 82 (vgl. Figur 8) zusammen. Dieses Zusammenwirken wird nachfolgend anhand der Figuren 10 bis 11 erläutert, welche Momentanaufnahmen des Verschwenkens einer Aufnahmerinne 116 mit Hilfe des in den Backraum eingefahrenen Mitnehmerbolzens 82 zeigen. Figur 10 zeigt die Position, in welcher die Mitnehmerstange 118 bei der Verlagerung der Gruppe 20 längs der Verlagerungsbahn 67 gerade in Kontakt mit dem Mitnehmerbolzen 82 gelangt ist.

Bei der weiteren Verlagerung der Antriebsketten 71, 72 wird die Aufnahmerinne 116 um die von den Axial-Radiallagern 23 vorgegebene Rotationsachse 25 verschwenkt. Hierbei gleitet der Mitnehmerbolzen 82 an der Mitnehmerstange 118 entlang. Eine End-Schwenkstellung bei diesem Mitnahmevorgang ist in Figur 11 gezeigt. In dieser Stellung ist die Aufnahmerinne 116 soweit entgegen dem Uhrzeigersinn um die Rotationsachse 25 der Axial-Radiallager 23 verschwenkt, dass das Backgut 7 aus der Aufnahmerinnne 116 in den Ausgabeschacht 83 fällt. Bei der weiteren Verlagerung der Aufnahmerinne 116 kommt die Mitnehmerstange 118 vom Mitnehmerbolzen 82 frei, sodass sich die Aufnahmerinnen 116 wieder in eine der Figur 10 entsprechende Position einpendelt.

## Patentansprüche

1. Backofen (1)
- mit einem Zugabeabschnitt mit einer Zugabeöffnung (10; 61) zur Zugabe von Backgut (7),
- mit einem Backraum (16),
- mit einem Ausgabeabschnitt mit einer Ausgabeöffnung (35; 84) zur Ausgabe von Backgut (7),
- mit einer Umluft-Einrichtung, welche umfasst:
-- eine einen Umluftstrom erzeugende Umluftquelle (40),
-- eine Umluft-Heizeinrichtung (41),
-- einen Umluft-Führungskanal (58; 105), der abschnittsweise durch den Backraum (16) gebildet ist,
- wobei der Backraum (16) mindestens einen Aufnahmeabschnitt (21; 116) für Backgut (7) umfasst, **gekennzeichnet durch**
- eine Mehrzahl von Aufnahmeabschnitten (21; 116) für Backgut (7),
- welche derart um einen horizontale Dreh- bzw. Schwenkachse (25) frei dreh- bzw. schwenkbar im Backraum (16) gelagert sind, dass die Dreh- bzw. Schwenkachse (25) der Aufnahmeabschnitte (21; 116) oberhalb des Schwerpunktes der Aufnahmeabschnitte (21; 116) auch dann liegt, wenn die Aufnahmeabschnitte (21; 116) mit Backgut (7) gefüllt sind.

2. Backofen nach Anspruch 1, **gekennzeichnet durch** eine Antriebseinrichtung (33; 70), mittels der der mindestens eine Aufnahmeabschnitt (21; 116) innerhalb des Backraums (16) verlagerbar ist.

3. Backofen nach Anspruch 1 oder 2, **gekennzeichnet durch** eine Mehrzahl von Aufnahmeabschnitten (21) für jeweils ein Stück Backgut (7), wobei bevorzugt jeder Aufnahmeabschnitt (21) einen einseitig offenen und dreh- bzw. schwenkbar gelagerten Aufnahmekorb (22) aufweist.

4. Backofen nach einem der Ansprüche 1 bis 3, **dadurch gekennzeichnet, dass** jeweils eine Gruppe (20) von Aufnahmeabschnitten (21) miteinander starr verbunden und gemeinsam drehbar gelagert ist, wobei bevorzugt die Gruppe (20) von Aufnahmeabschnitten (21) einen gemeinsamen, schwenkbar gelagerten Tragrahmen (26), insbesondere aus Aluminium, für die Aufnahmekörbe (22) der Gruppe (20) aufweist.

5. Backofen nach Anspruch 1 oder 2, **gekennzeichnet durch** eine Mehrzahl von Aufnahmeabschnitten (116) für jeweils eine Mehrzahl von Stücken Backgut (7), wobei jeder Aufnahmeabschnitt (116) dreh- bzw. schwenkbar gelagert ist.

6. Backofen nach einem der Ansprüche 1 bis 5, **gekennzeichnet durch**
- eine an den Backraum (16) angeschlossene und gesteuert zuschaltbare Vakuumpumpe, mit der im Backraum (16) ein vorgegebener Unterdruck einstellbar ist; und/oder
- eine an den Backraum (16) angeschlossene und gesteuert zuschaltbare Beschwadungseinrichtung (112, 113), mit der der Backraum (16) mit Schwaden versorgt werden kann.

7. Backofen nach einem der Ansprüche 2 bis 6, **dadurch gekennzeichnet, dass** die Antriebseinrichtung (33) derart ausgeführt ist, dass der mindestens eine Aufnahmeabschnitt (21) um eine horizontal verlaufende Rotationsachse (17) drehbar angetrieben ist.

8. Backofen nach Anspruch 7, **dadurch gekennzeichnet, dass** eine äußere (15) und/oder eine innere (18) Begrenzungswand des Backraums (16), zwischen denen die Aufnahmeabschnitte (21) angeordnet sind, Umluft-Durchtrittsöffnungen (28) aufweisen.

9. Backofen nach einem der Ansprüche 7 oder 8, **dadurch gekennzeichnet, dass** in einer äußeren Begrenzungswand (15) des Backraums (16) eine verschließbare Backgut-Durchtrittsöffnung (14) für Backgut (7) angeordnet ist, die je nach Drehposition der äußeren Begrenzungswand (15) mit der Zugabeöffnung (10) oder der Ausgabeöffnung (35) zur Zugabe oder Ausgabe von Backgut (7) zusammenwirkt.

10. Backofen nach einem der Ansprüche 1 bis 9, **gekennzeichnet durch**
- eine insbesondere oberhalb des Backraums (16) angeordnete Backofen-Zugabetür (11), die mittels eines Aktuators (13) zwischen einer Backposition, in der die Backofen-Zugabetür (11) den Zugabeabschnitt verschließt, und einer Zugabeposition, in der eine Zugabe von Backgut (7) **durch** den Zugabeabschnitt möglich ist, verlagerbar ist, und/oder
- eine insbesondere unterhalb des Backraums (16) angeordnete Backofen-Ausgabetür (36), die mittels eines Aktuators (38) zwischen einer Backposition, in der die Backofen-Ausgabetür (36) den Ausgabeabschnitt verschließt, und einer Ausgabeposition, in der eine Ausgabe von Backgut (7) **durch** den Ausgabeabschnitt möglich ist, verlagerbar ist.

11. Backofen nach Anspruch 10, **dadurch gekennzeichnet, dass** die Backraum-Zugabetür (11), die Backraum-Ausgabetür (36) und die Durchtrittsöffnung (14) derart ausgeführt sind, dass sie gesteuert verlagert werden können.

12. Backofen nach einem der Ansprüche 1 bis 6 sowie 10 oder 11, **dadurch gekennzeichnet, dass** die Antriebseinrichtung (70) mit mindestens einem flexiblen geschlossenen Antriebsstrang (71, 72) zusammenarbeitet, an dem die Aufnahmeabschnitte (21; 116) angebracht sind, wobei der Antriebsstrang (71, 72)
- mittels einer Führungseinrichtung (66) so geführt und
- mittels der Antriebseinrichtung (70) so angetrieben ist,
- dass er längs einer geschlossenen Bahn (67) umläuft und hierbei die Aufnahmeabschnitte (21; 116) verlagert.

13. Backofen nach Anspruch 12, **dadurch gekennzeichnet, dass** der Antriebsstrang (71, 72) als Antriebskette ausgeführt ist, in welche ein Antriebsritzel (74) der Antriebseinrichtung (70) eingreift.

14. Backofen nach Anspruch 12 oder 13, **dadurch gekennzeichnet, dass** die Aufnahmeabschnitte (21; 116) zwischen einem Paar von symmetrisch voneinander geführt umlaufenden Strängen (71, 72) angebracht sind, wobei mindestens einer (71) der Stränge (71, 72) angetrieben ist.

15. Backofen nach einem der Ansprüche 12 bis 14, **dadurch gekennzeichnet, dass** die Führungseinrichtung (66) eine Mehrzahl von Umlenkrollen (79) und/oder eine Mehrzahl von Führungsschienen (76) für den mindestens einen Antriebsstrang (71, 72) umfasst.

16. Backofen nach einem der Ansprüche 1 bis 15, **gekennzeichnet durch** eine Mitnehmereinrichtung (80) zum Schwenken der Aufnahmeabschnitte (21; 116) um ihre Dreh- bzw. Schwenkachse (25), wobei bevorzugt die Mitnehmereinrichtung (80) einen Mitnehmerbolzen (82) aufweist,
- der gesteuert zwischen einer Mitnehmerstellung und einer Ruhestellung ein- und ausfahrbar ist, und
- in der Mitnehmerstellung mit einem Gegenkörper (118) des Aufnahmeabschnitts (21; 116) zum Schwenken von diesem zusammenwirkt und
- in der Ruhestellung in die Bewegungsbahn (67) des Gegenkörpers (118) bei der Verlagerung der Aufnahmeabschnitte (21; 116) nicht eindringt.
